Europäisches Patentamt

European Patent Office

Office européen des brevets

(11) Veröffentlichungsnummer : **0 083 005**
**B1**

# EUROPÄISCHE PATENTSCHRIFT

(45) Veröffentlichungstag der Patentschrift :
10.09.86

(21) Anmeldenummer : **82111486.5**

(22) Anmeldetag : **10.12.82**

(51) Int. Cl.⁴ : **B 01 D 13/00**

(54) **Flachmembran-Trenngerät.**

(30) Priorität : 24.12.81 DD 236271

(43) Veröffentlichungstag der Anmeldung :
06.07.83 Patentblatt 83/27

(45) Bekanntmachung des Hinweises auf die Patenterteilung : 10.09.86 Patentblatt 86/37

(84) Benannte Vertragsstaaten :
**CH DE FR GB LI NL**

(56) Entgegenhaltungen :
DD-B-  114 205
DE-A- 2 259 481
DE-A- 2 545 482
DE-A- 2 814 924
DE-A- 3 001 448
DE-C-   498 209

(73) Patentinhaber : **VEB Chemieanlagenbaukombinat
Leipzig-Grimma
Bahnhofstrasse 3-5
DDR-7240 Grimma (DD)**

(72) Erfinder : **Dreyer, Siegfried, Dipl.-Ing.
Wilhelm-Raabe-Strasse 19
DDR-3080 Magdeburg (DD)**

(74) Vertreter : **Patentanwälte Beetz sen. - Beetz jun.
Timpe - Siegfried - Schmitt-Fumian
Steinsdorfstrasse 10
D-8000 München 22 (DE)**

EP 0 083 005 B1

## Beschreibung

Die Erfindung betrifft ein Flachmembran-Trenngerät der im Oberbegriff des Patentanspruchs 1 angegebenen Gattung, mit dem gelöste und teilweise auch suspendierte Stoffe aus echten und kolloidalen Lösungen durch Ultrafiltration, Reversosmose u. dgl. abgetrennt werden können.

Bei bekannten Flachmembran-Trenngeräten werden durch unterschiedliche Mittel Flüssigkeitsströmungen an den Membranoberflächen der Filterscheiben erzeugt, um die Bildung von hemmenden Deckschichten auf den Membranen und eine Konzentrationsüberhöhung in Membrannähe zu verhindern.

Aus der DE-A-25 45 482 ist ein Flachmembran-Trenngerät der angegebenen Gattung bekannt, bei dem die einzelnen ringförmigen Filterscheiben an ihrem Außenumfang an der Behälterwand befestigt sind und durch äußere Abstandshalter in vorbestimmten Zwischenabständen gehalten werden. Im zentralen Innenraum befindet sich eine drehangetriebene Welle, an welcher in den Zwischenräumen der Filterscheiben angeordnete Scheiben drehbar befestigt sind. In jeder aufgerauhten Oberfläche dieser Scheiben verlaufen bogenförmige Radialnuten, die ähnlich wie beim Flügelrad einer Schleuderpumpe eine Zentripedalkraft bzw. einen Druck in Richtung auf die inneren Scheibenränder erzeugen, durch den die aufgrund der Drehbewegung der Scheiben hervorgerufenen Zentrifugalkräfte annähernd ausgeglichen werden. Auf diese Weise wird der Druck des dem Behälter zugeführten Fluids in allen Flächenbereichen der Filterscheiben 11 annähernd gleich gehalten, wodurch eine ungleichmäßige Filtrationswirkung und Beschädigungen der Filterelemente bzw. der Membranen vermieden werden sollen. Um die Wirkung der größeren Turbulenzen in den radial äußeren Bereichen der angetriebenen Scheiben auszugleichen, nimmt die Wandstärke dieser Scheiben nach außen hin kontinuierlich ab, so daß sich die Höhe der freien Spalträume entsprechend vergrößert. Bei diesem bekannten Gerät sind jedoch nicht nur die mit Bezug auf die Abmessungen geringe Anzahl an Filterscheiben, sondern auch das Abklingen der Relativgeschwindigkeit vom äußeren Scheibenrand zum Scheibenzentrum, eine für die Depolarisierung ungünstige Stromfadenlänge sowie die sich beim Antrieb des rotierenden Scheibenpakets ergebenden Probleme nachteilig.

In der DE-A 28 14 924 ist ein rotierendes Trenngerät beschrieben, bei dem ein nach dem Vorbild einer Membranpresse gestaltetes Scheibenpaket in einem Behälter angeordnet ist. Trotz der sich u. U. ergebenden verfahrenstechnischen Vorteile kann die komplizierte Ausführung dieses Gerätes den Wegfall einer Umlaufpumpe nicht ausgleichen.

In der DD-B 114 205 ist ein Ultrafiltrationsgerät beschrieben, bei dem pressenartig zusammengefügte Kammern in einem Druckbehälter angeordnet sind, der mittels Druckluft und/oder einer Umlaufpumpe mit der zu trennenden Flüssigkeit beaufschlagt wird. Im Plattenpaket sind Drallringe mit düsenartigen Einlaufkanälen angeordnet, die jedoch separate Zulaufanschlüsse erfordern. Die zur Erzeugung der erwünschten Drallströmung herangezogenen Düsenstrahlen zerstören jedoch in Düsennähe die trennaktiven Schichten der Membranen und führen zu einem vorzeitigen Ausfall der Filterscheiben im Dauerbetrieb. Darüber hinaus kann die volle Wirksamkeit der Dralldepolarisierung nur unter bestimmten Bedingungen erreicht werden. Bei der Erzeugung einer Drallströmung mit Hilfe von Düsen entsteht ein ungünstiges Querschnittsverhältnis von Düsenbohrung und Drallkammer, so daß in der Düse jeweils eine erheblich größere Geschwindigkeit zu erzeugen ist, als sie sich als Umfangskomponente am Außenrand der Drallkammer äußert. Hierdurch entstehen größere Reibungsverluste und weitere Energieverluste dadurch, daß die Geschwindigkeitsdifferenz an der Stelle der Stromvereinigung in Düsennähe weitgehend vernichtet wird. Eine weitere Verminderung der Umfangskomponente wird dadurch hervorgerufen, daß die Drallströmung eine Meridiankomponente bedingt, die am Außenrand der Drallkammer mit einer tangentialen Querschnittserweiterung gleichzusetzen ist, so daß sie mit zunehmender Entfernung von der Düse entsprechend abnimmt, wodurch sich die Randbedingungen der Drallströmung verschlechtert. Diese Nachteile können auch nicht durch mehrere Düsen pro Kammer beseitigt werden, da zwar die Geschwindigkeitsunterschiede am Außenrand vermindert werden können, jedoch bei gleichem Querschnitt die Umlaufmenge im gleichen Verhältnis vergrößert oder bei entsprechend verringertem Düsendurchmesser das Verhältnis zum Querschnitt der Drallkammer noch ungünstiger und somit die Feststoffbelastbarkeit des Trenngeräts entscheidend verringert wird.

Ziel der Erfindung ist es, ein Flachmembran-Trenngerät zu schaffen, bei dem die Nachteile des Standes der Technik beseitigt sind und ein günstigeres Verhältnis von Trennleistung zu Energieaufwand sowie eine gesteigerte Feststoffbelastbarkeit erreicht werden.

Aufgabe der Erfindung ist es, ein Flachmembran-Trenngerät der angegebenen Gattung zu schaffen, bei dem hohe Trenneffekte durch eine breit variierbare ausgeglichene Drallströmung erreicht und sowohl Energiespitzen sowie unterdepolarisierte Flächenanteile wie auch örtliche Überbeanspruchungen der Membranen vermieden werden.

Diese Aufgabe wird durch die kennzeichnenden Merkmale des Patentanspruchs 1 gelöst.

Das erfindungsgemäße Trenngerät ermöglicht einen weiteren Abbau der Energieverluste und eine größere Unempfindlichkeit gegenüber Feststoffbelastungen. Es können vollkommen ausgeglichene Randströmungen erzielt werden. Die Coriolis- und Zentripedalkräfte sowie die Flüssigkeitsreibung wird so berücksichtigt, daß eine annähernd konstante Fließgeschwindigkeit und bereits bei geringen Umlaufmengen eine über die Gesamtflächereichende Turbulenz gewährleistet wird, wobei sich der Energiebedarf weiter vermindert, weil die gegenüber einer Drallströmung mit $c_u r$ = konst. auftretenden radialen Druckunterschiede erheblich abgebaut werden.

Erfindungsgemäß erzeugt der in Form eines Rührers ausgebildete drehangetriebene Bauteil in allen Spalträumen die für eine Drallströmung erforderliche Umfangsgeschwindigkeit, wobei die notwendigen Meridiankomponenten durch eine Umlaufpumpe erzeugt werden können.

Gemäß einer Ausgestaltung der Erfindung wird der drehangetriebene Bauteil mit einer Fördervorrichtung kombiniert, so daß die Umfangsgeschwindigkeit wie auch die Meridiankomponente des Förderstroms direkt zur Drallerzeugung ausgenutzt wird und eine gesonderte Umlaufpumpe entfallen kann. Insbesondere für kleine Umlaufmengen kann die Fördervorrichtung in Form einer am Scheibenpaket oder am Behälter befestigten Injektorscheibe ausgebildet sein, wobei im Bereich des umlaufenden Bauteils ein Unterdruck zur Förderung der Depolarisierungsflüssigkeit vom durchgehenden Innenkanal zum äußeren Ringraum ausgenutzt wird.

Zweckmäßig werden jeweils drei erfindungsgemäße Distanzringe vorzugsweise in der Nähe des Innendurchmessers der Filterscheiben so angeordnet, daß ihr Innenraum mit in den Filterscheiben vorgesehenen Querbohrungen fluchtet. In Längsrichtung genutete oder abgeflachte Spannbolzen sind gemäß einer Ausgestaltung der Erfindung durch diese Querbohrungen und die Distanzringe hindurchgeführt und an einer Stirnseite des Behälters angeflanscht, so daß die Filterscheiben mit den Distanzringen zusammengespannt werden. Das im porösen Teil der Filterscheiben angesammelte Permeat wird über Permeaträume in den Filterscheiben in die Querbohrungen bzw. in die Axialkanäle in den Spannbolzen geleitet, wobei die Distanzringe auf in die Filterscheiben im Bereich der Querbohrungen eingelegte Platten gedrückt werden, die den durch den Spanndruck verminderten Durchflußquerschnitt der porösen Scheibenauflage durch Kanäle oder Bohrungen ausgleichen.

Die zu trennende Rohlösung wird unter einem Überdruck in den Behälter des Flachmembran-Trenngerätes geleitet, so daß eine Triebkraft für einen Flüssigkeitsstrom durch die Membranen hindurch entsteht. Dabei werden die gelösten Stoffe von den Membranen zurückgehalten, während das als Permeat bezeichnete Lösungsmittel in das zwischen Membranen und Filterscheiben eingebettete poröse Material und dort parallel zu den Filterscheiben in Richtung der flüssigkeitsdurchlässigen Platten fließt und über die Nuten oder Abflachungen der Spannbolzen zur Behälterstirnwand abgeführt wird. Vorzugsweise münden die Nuten oder Abflachungen in den Spannbolzen in eine von einem Stirnflansch dicht abgedeckte Ringnut, so daß das Permeat über einen mit dieser Ringnut verbundenen Auslaufstutzen aus dem Behälter abgeführt wird.

Bei der Ausführung mit nur einem drehangetriebenen Bauteil im äußeren Ringraum wird die Rohlösung durch eine Umlaufpumpe über vorzugsweise tangentiale Einlaufbohrungen in den Behälter gefördert und durch den als Rührwerk ausgebildeten drehangetriebenen Bauteil in Umfangsrichtung beschleunigt, so daß im Ringraum zwischen der Behälterwand und dem Filterscheibenstapel eine Umfangsströmung mit einer der Rührerdrehzahl entsprechenden Geschwindigkeit entsteht. Die Geschwindigkeitskomponente in Umfangsrichtung wird von einer aus dem Förderstrom resultierenden Meridiankomponente überlagert, so daß die Flüssigkeit von der Peripherie der Filterscheiben radial nach innen durch die Spalträume gedrückt wird. Hierbei erzeugt die Radialbewegung tangentiale Beschleunigungskräfte, die ein Äquivalent zu den entgegengesetzt gerichteten Reibungskräften darstellt, so daß die Größe der Umfangsgeschwindigkeit im Ringraum über die gesamten Scheibenflächen bis zum Einlauf in den zentralen Innenkanal erhalten bleibt.

Bei einer Kombination des Rührers mit einer weiteren Fördervorrichtung in Form eines Schaufelrades oder eines scheibenförmigen Injektors können weitere Energievorteile durch Wegfall der äußeren Umlaufelemente sowie durch direkte Ausnutzung der bereits bei der Flüssigkeitsförderung gebildeten Umfangskomponente erhalten werden. Bei diesen Varianten wird die Flüssigkeit aus dem inneren Zentralkanal direkt der Einlauföffnung der Fördervorrichtung zugeführt, so daß innerhalb des Behälters eine Zirkulationsströmung entsteht und eine äußere Umlaufpumpe entfallen kann. Auch bei diesen Ausführungen wird der erforderliche Trenndruck durch Druckluftzufuhr in den Behälter eingestellt.

Die Erfindung soll nachstehend an einem Ausführungsbeispiel erläutert werden. Die dazugehörigen Zeichnungen zeigen :

Figur 1 den Längsschnitt durch ein Flachmembran-Trenngerät mit Rührer

Figur 2 den Querschnitt einer Flachmembran-Trenneinheit mit Rührer

Figur 3 einen Teillängsschnitt durch das Scheibenpaket des Flachmembran-Trenngerätes

Figur 4 den Längsschnitt durch ein Flachmembran-Trenngerät, bei dem der Rührer mit einem radialen Förderlaufrad kombiniert ist.

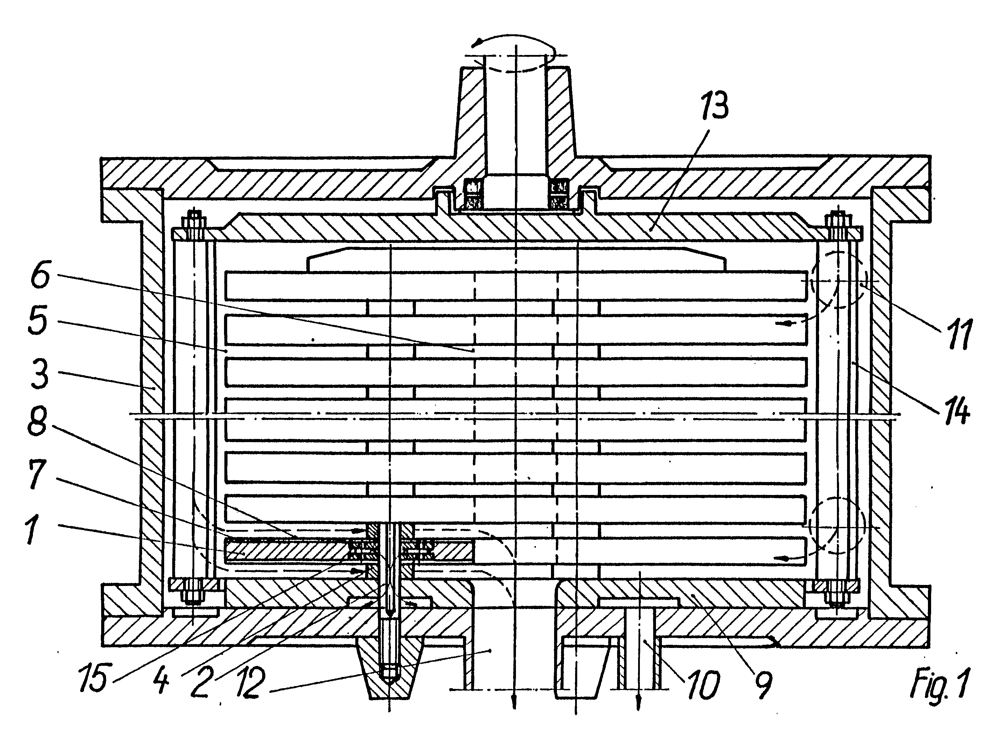

Fig. 1 zeigt ein Flachmembran-Trenngerät, bei dem die Filterscheiben 1 mit Hilfe von drei in Längsrichtung genuteter Spann- und Permeatableitbolzen 2 zusammengespannt und an die untere Stirnseite des Behälters 3 angeflanscht sind, wobei die eingelegten drei Distanzringe 4 zwischen jedem Scheibenpaar einen entsprechend der Höhe der Distanzringe 4 bestimmten, am äußeren und inneren Scheibenradius jeweils offenen Spalt bezw. Ringraum 5 ; 6 ergeben. Dabei sind die Filterscheiben 1 in an sich bekannter Weise mit einem porösen Material 7 und daraufliegenden semipermeablen Membranen 8 oder einem anderen Filtermittel belegt und an den Rändern durch geeignete Mittel mit den Filterscheiben 1 dichtend verbunden. Dadurch entstehen im Flachmembran-Trenngerät zwei voneinander abgetrennte Flüssigkeitsräume, wobei der Permeatraum mit der Ringnut des Stirnflansches 9 sowie dem Auslaufstutzen 10 verbunden ist und der Konzentratraum über die vorzugsweise tangentialen Zulaufstutzen Einlaufbohrungen 11 und den Auslaufstutzen 12 mit der in der Zeichnung nicht dargestellten Umlaufpumpe in Verbindung steht.

Die im Ausführungsbeispiel entsprechend Fig. 1 gezeigten Rührwerksvariante besteht aus einem im Behälterbodenflansch drehbar gelagerten und gegen den Flüssigkeitsdruck abgedichteten Fingerrührer 13 sowie einem in der Zeichnung nicht dargestellten an sich bekannten Einzel- oder Gruppenantrieb. Unter Umständen kann jedoch auch eine Gestaltung als Magnetrührer vorteilhaft werden.

Bei kleineren Flachmembran-Trenneinheiten kann auch bereits ein lediglich durch das tangential einströmende Konzentrat angetriebener Rührer Vorteile ergeben, wobei er in diesem Falle jedoch nur die Geschwindigkeitsunterschiede an der Peripherie der Filterscheiben 1 ausgleicht.

Das mit Hilfe der Umlaufpumpe durch die Einlaufbohrungen 11 in den Behälter 3 einströmende Konzentrat wird in Umfangrichtung durch den Rührer 13 beschleunigt und/oder geschwindigkeitsseitig ausgeglichen, wobei die geeignete Wahl zwischen der Größe der Umfangsgeschwindigkeit und der Fördermenge die derart erzeugte Umfangskomponente in jedem Punkt der durch die Filterscheiben 1 begrenzten Spalträume konstant hält.

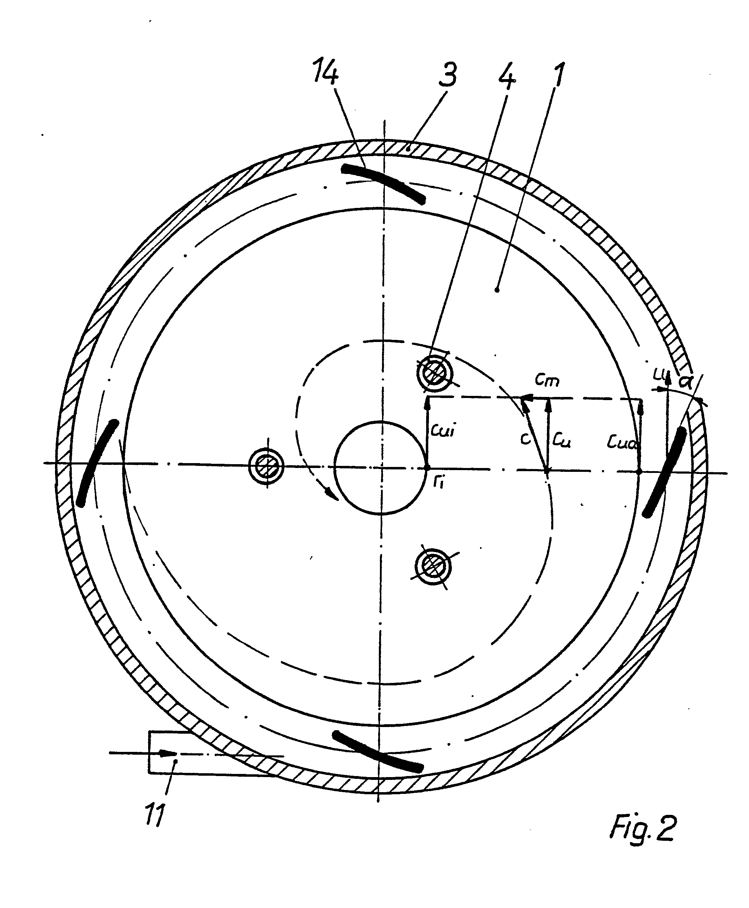

Fig. 2 verdeutlicht ein mit der erfindungsgemäßen Ausführung erzeugbares Geschwindigkeitsbild, das über der Membranfläche bereits mit relativ geringen Meridiangeschwindigkeiten $c_m$ zu erreichen ist. Das Ausführungsbeispiel zeigt weiterhin den Querschnitt der Rührblätter bezw. -schaufeln 14, die unter einem Winkel $\alpha$ angestellt sind, so daß ein Schlupf zwischen Rührer- und Konzentratbewegung entsteht, der ein Rührerantrieb ohne Untersetzung durch ein Getriebe ermöglicht und außerdem noch einen radialen Förderdruck entstehen läßt. Ein weiterer Vorteil besteht darin, daß mit den in Längsachse drehbar am Rührer 13 befestigten Rührblättern 14 der Anstellwinkel $\alpha$ leicht den Anforderungen anzupassen ist, ohne die Drehzahl des Rührers 13 zu verändern. Bei größeren Flachmembran-Trenneinheiten ist weiterhin durch räumlich gekrümmt ausgeführte Rührblätter 14 ein unterschiedlicher Anstellwinkel $\alpha$ über die Länge der Rührblätter 14 zu erreichen, wodurch ein durch das abströmende Konzentrat bedingter unterschiedlicher Differenzdruck zwischen äußerem und innerem Scheibenradius ausgeglichen wird.

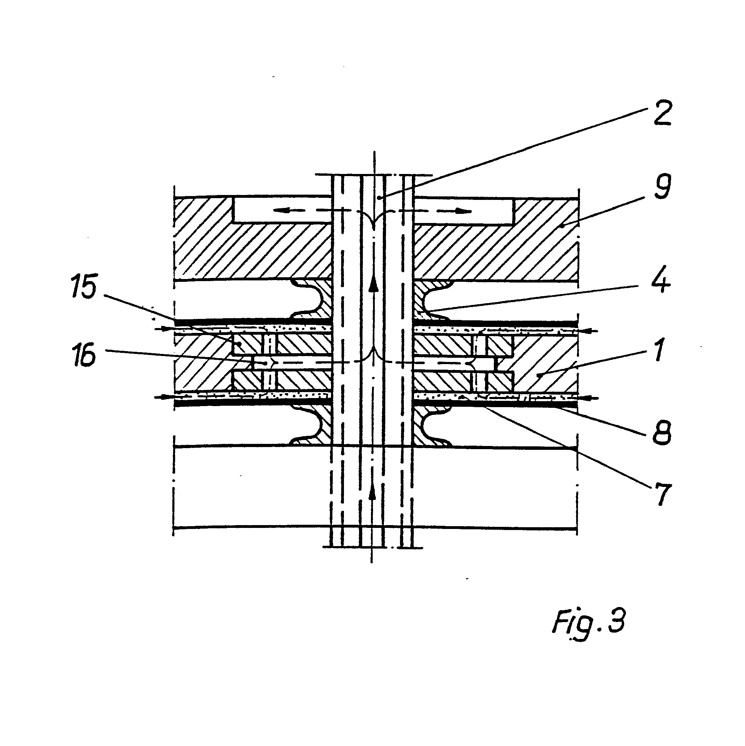

Fig. 3 zeigt einen Teillängsschnitt durch das Scheibenpaket des Flachmembran-Trenngerätes, mit dem die Art der Ableitung des Permeats aus dem zwischen Filterscheiben 1 und Membranen 8 eingebetteten porösen Material 7 näher erläutert wird. Den im Bereich der Distanzringe 4 durch den Spanndruck der Spannbolzen 2 verminderten Durchflußquerschnitt des porösen Materials 7 berücksichtigen die beidseitig in die Filterscheiben 1 eingelassenen, außerhalb des Spannbereiches gelochten Platten 15, wobei das durch die Bohrungen abströmende Permeat in den durch die Platten 15 eingeschlossenen Hohlraum und Permeatkanal 16 gelangt, von wo es in den Längsnuten des Spannbolzens 2 zur Ringnut des Stirnflansches 9 abfließt.

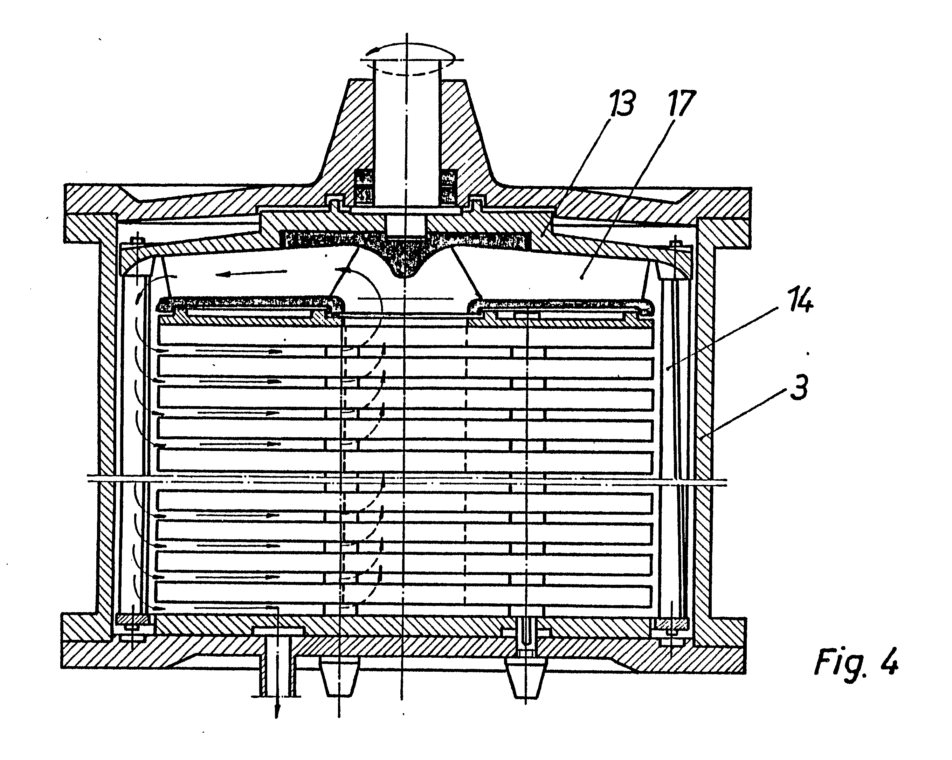

Fig. 4 zeigt den Längsschnitt durch ein Flachmembran-Trenngerät, bei dem in Abweichung von einer Ausführung gemäß Fig. 1 der Rührer 13 mit einem radialen Förderlaufrad 17 derart kombiniert ist, daß das zur Depolarisierung verwendete Konzentrat nur noch innerhalb des Flachmembran-Trenngerätes umläuft. Das Förderlaufrad 17 erzeugt hierbei direkt sowohl die zur Drallströmung erforderliche Umfangskomponente $c_u$, wie auch die gleichzeitig notwendige Meridiangeschwindigkeit $c_m$, während die mit dem Förderlaufrad 17 verbundenen Rührblätter 14 hier die derart entstandene Umfangsgeschwindigkeit über die gesamte Höhe des Scheibenpaketes aufrechterhalten. Vorteilhaft werden hierbei entsprechend der Fig. 2 ausgeführte, unter einem bestimmten Winkel $\alpha$ angestellte Rührblätter 14, damit die Umfangsgeschwindigkeit u von Förderlaufrad 17 größer als die Umfangskomponente $c_u$ der Drallströmung eingestellt werden kann. Bei großen Flachmembran-Trenngeräten werden dazu noch räumlich gekrümmte Rührblätter zweckmäßig, während bei solchen mit nur geringer Scheibenzahl diese sogar ganz entfallen können, so daß zur Förderung und Drallerzeugung lediglich das Förderlaufrad 17 benötigt wird. Zur Kühlung der Depolarisierungsflüssigkeit ist vorzugsweise der Behälter 3 mit einem Kühlmantel zu versehen, jedoch läßt sich mit einem Auslaufstutzen 12 gemäß Fig. 1 und einem zusätzlich vorzugsweise in der gegenüberliegenden Stirnwand eingelassenen Einlaufstutzen auch ein Kreislauf realisieren, in dem ein paralleles Kühlgerät eingebunden ist.

**Patentansprüche**

1. Flachmembran-Trenngerät zur Ultrafiltration, Reversosmose und dgl. bestehend aus einem zylindrischen Behälter (3) mit je einem Ablauf (10, 12) für das Permeat und für das Konzentrat, aus einem Stapel von innere Permeaträume aufweisenden ringförmigen Filterscheiben, die mittels Abstandshaltern mit vorgegebenen Zwischenabständen im Behälter festgelegt sind und radial innen und außen offene Spalträume begrenzen, und aus einem drehangetriebenen Bauteil im Behälter, das eine Turbulenz in den Spalträumen an den wirksamen Stirnflächen der Filterscheiben erzeugt, dadurch gekennzeichnet, daß der drehangetriebene Bauteil (13, 14) in einem zwischen den Filterscheiben (1) und der Wandung des Behälters (3) ausgebildeten Ringraum (5) angeordnet ist und in den Spalträumen eine zum axial durchgehenden Innenraum (6) gerichtete Strömung erzeugt und daß die in Form von Distanzringen (4) zwischen den Filterscheiben (1) angeordneten Abstandshalter über Querbohrungen in den Filterscheiben (1) mit den Permeaträumen (16) der Filterscheiben (1) kommunizieren.

2. Trenngerät nach Anspruch 1, dadurch gekennzeichnet, daß der drehangetriebene Bauteil (13) mehrere gekrümmte Schaufeln (14) enthält, die mit unterschiedlichen Winkeln α zur Anströmrichtung anstellbar sind.

3. Trenngerät nach Anspruch 1 oder 2, dadurch gekennzeichnet, daß in den Querbohrungen der Filterscheiben (1) und in den zu diesen fluchtenden Distanzringen (4) Spannbolzen (2) mit axialen Permeatkanälen angeordnet sind.

4. Trenngerät nach Anspruch 3, dadurch gekennzeichnet, daß in den Filterscheiben (1), die mit einem porösen Material (7) belegt sind, mindestens je eine Platte (15) angeordnet ist, die vom porösen Belag zur Querbohrung führende Permeatkanäle (16) aufweist.

5. Trenngerät nach einem der Ansprüche 1 bis 4, dadurch gekennzeichnet, daß im Behälter (3) zusätzlich eine Fördervorrichtung (17) angeordnet ist, die eine zirkulierende Rückströmung des Konzentrats innerhalb des Behälters (3) vom durchgehenden Innenraum (6) zum äußeren Ringraum (5) erzeugt.

6. Trenngerät nach Anspruch 5, dadurch gekennzeichnet, daß die Fördervorrichtung ein mit radialen Schaufeln besetztes Laufrad (17) enthält, das mit dem drehangetriebenen Bauteil (13, 14) fest verbunden und in einem Raum am Ende des Filterscheibenpakets angeordnet ist.

7. Trenngerät nach einem der Ansprüche 1 bis 4, dadurch gekennzeichnet, daß tangentiale Zulaufstutzen (11) am Behälter (3) befestigt sind, die in dem äußeren Ringraum (5) ausmünden.

## Claims

1. A separation device with a flat membrane for ultrafiltration, reverse osmosis and the like, comprising a cylindrical container (3) having respective discharge ports (10, 12) for the permeate and the concentrate, respectively, a stack of annular filter disks including interior permeate spaces, said filter disks being secured within the container with predetermined spacings therebetween by means of spacer elements and defining gap-like spaces open in radial inward and outward direction, and a rotatably driven member within the container for producing a turbulence in said gap-like spaces at the active end faces of the filter disks, characterised in that said rotatably driven member (13, 14) is disposed in an annular space (5) defined between the filter disks (1) and the wall of the container (3) and produces in said gap-like spaces a flow directed towards the axially continuous interior space (6), and that the spacer elements in the form of distance rings (4), which are disposed between the filter disks (1), communicate with the permeate spaces (16) of the filter disks (1) via transverse bores formed in the filter disks (1).

2. A separating device as claimed in claim 1, characterised in that the rotatably driven member (13) comprises a plurality of arcuate blades (14) adapted to be adjusted at different angles α to the direction of flow.

3. A separating device as claimed in claim 1 or claim 2, characterised in that tension bolts (2) provided with axial permeate passageways are disposed in the transverse bores of the filter disks (1) and in the distance rings (4) which are in alignment therewith.

4. A separating device as claimed in claim 3, characterised in that in each of the filter disks (1), which are coated with a porous material (7), there is disposed at least one plate (15) provided with permeate passageways (16) leading from the porous coating to the transverse bore.

5. A separating device as claimed in any of the claims 1 to 4, characterised in that in the container (3) there is additionally disposed a conveying means (17) for producing a circulating return flow of the concentrate within the container (3) from the continuous interior space (6) to the outer annular space (5).

6. A separating device as claimed in claim 5, characterised in that the conveying means comprises an impeller (17) provided with radial blades, said impeller being fixedly joined to the rotatably driven member (13, 14) and being disposed in a space at the end of the stack of filter disks.

7. A separating device as claimed in any of the claims 1 to 4, characterised in that tangential inlet ports (11) are mounted on the container (3) and open into the outer annular space (5).

## Revendications

1. Appareil de séparation à membrane plate pour l'ultra-filtration, l'osmose inverse et procédés analogues, comprenant un réservoir cylindrique (3) avec sorties (10 ; 12) respectives pour le perméat et le produit concentré, un empilement de disques filtrants annulaires présentant des espaces de perméat intérieurs, disposés dans le réservoir avec espacement prédéterminé au moyen d'entretoises et limitant radialement, à l'intérieur et à l'extérieur, des espaces de fentes ouverts, et un élément commandé par rotation, logé dans le réservoir et produisant une turbulence dans les espaces de fentes sur les faces actives des disques filtrants, caractérisé en ce que l'élément commandé par rotation (13 ; 14) est disposé dans un espace annulaire (5) aménagé entre les disques filtrants (1) et la paroi du réservoir (3) et produit dans les espaces de fentes un écoulement en direction de l'espace intérieur axial continu (6) et en ce que les entretoises en forme de bagues d'espacement (4) et disposées entre les disques filtrants (1) communiquent, par l'intermédiaire d'alésages transversaux pratiqués dans les disques filtrants (1), avec les espaces de perméat (16) des disques filtrants (1).

2. Appareil de séparation selon la revendication 1, caractérisé en ce que l'élément commandé par rotation (13) comporte plusieurs palettes courbées (14) qui peuvent être réglées à différents angles par rapport à la direction de l'écoulement.

3. Appareil de séparation selon la revendication 1 ou 2, caractérisé en ce que les alésages transversaux des disques filtrants (1) et les bagues d'espacement (4) alignées comprennent des boulons de serrage (2) à canaux de perméat axiaux.

4. Appareil de séparation selon la revendication 3, caractérisé en ce que les disques filtrants (1), qui sont garnis d'un matériau fragile (7), comprennent chacun au moins une plaque (15) présentant des canaux de perméat (16) reliant la garniture poreuse à l'alésage transversal.

5. Appareil de séparation selon l'une des revendications 1 à 4, caractérisé en ce que le réservoir (3) comporte, de plus, un dispositif de transport (17) produisant, à l'intérieur du réservoir (3), la recirculation du produit concentré de l'espace intérieur continu (6) à l'espace annulaire extérieur (5).

6. Appareil de séparation selon la revendication 5, caractérisé en ce que le dispositif de transport comporte une roue à palette radiales (17), solidaire de l'élément commandé par rotation (13 ; 14) et disposé dans un espace à l'extrémité de l'empilement de disques filtrants.

7. Appareil de séparation selon l'une des revendications 1 à 4, caractérisé en ce que des tubulures d'entrée tangentielles (11) se trouvent fixées sur le réservoir (3), débouchant dans l'espace annulaire extérieur (5).

Fig.1

Fig. 2

Fig.3

Fig. 4

14

3

13

17

13